# EUROPEAN PATENT SPECIFICATION

(11) **EP 4 567 374 B1**
(45) Date of publication and mention of the grant of the patent: **07.10.2026**
(21) Application number: 24757127.6
(22) Date of filing: 08.02.2024
(51) Int. Cl.: G01B 11/25, G01B 11/02, G01B 11/28, G06T 7/00, G06T 7/60, H01M 50/20, G01B 11/24, H01M 50/204, H01M 50/293

(54) **INSPECTION DEVICE, SYSTEM COMPRISING SAME, AND METHOD FOR MANUFACTURING BATTERY MODULE**
INSPEKTIONSVORRICHTUNG, SYSTEM DAMIT UND VERFAHREN ZUR HERSTELLUNG EINES BATTERIEMODULS
DISPOSITIF D'INSPECTION, SYSTÈME LE COMPRENANT ET PROCÉDÉ DE FABRICATION DE MODULE DE BATTERIE

(30) Priority: 13.02.2023 KR 20230018797
(43) Date of publication of application: 11.06.2025
(73) Proprietor: LG Energy Solution, Ltd., Seoul 07335 (KR)
(72) Inventor: LEE, Seung Jun, Daejeon 34122 (KR); LEE, Jung Woo, Daejeon 34122 (KR); KIM, Tae Wook, Daejeon 34122 (KR)
(74) Representative: Plasseraud IP
(86) International application number: PCT/KR2024/001864
(87) International publication number: WO 2024/172398

(56) References cited:
- JP-A- 2017 125 841
- JP-A- 2019 148 569
- JP-B2- 4 551 324
- KR-A- 20150 059 520
- KR-A- 20180 064 582
- KR-A- 20210 021 160
- KR-B1- 101 831 301
- US-A1- 2010 327 468
- US-A1- 2022 393 283

## Description

### [Technical Field]

The present invention relates to an inspection device, a system including the inspection device, and a battery module manufacturing method. The present application claims the benefit of priority based on Korean Patent Application No. 10-2023-0018797, filed on February 13, 2023.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used in mobility, the demand for secondary batteries is rapidly increasing. Accordingly, methods of manufacturing secondary batteries with improved reliability and productivity are being studied.

US 2022/393283 A1 discloses a battery module including a cell stack in a U-shaped frame with a thermally conductive resin layer between the stack and the bottom.

### [Disclosure]

### [Technical Problem]

The present invention is directed to providing a system for manufacturing at least a part of a battery module, the system comprising an inspection device capable of reducing a tact time, and a battery module manufacturing method.

### [Technical Solution]

The invention is defined in the set of claims.

To address the above-described problem, example embodiments of the present invention provide an inspection device. The inspection device includes a scanner configured to scan a resin composition on a frame to determine a three-dimensional (3D) profile of the frame and the resin composition on the frame, and an analyzer configured to determine an area and mass of the resin composition based on the 3D profile.

The scanner may include a laser source configured to generate an optical signal, and a detector configured to detect the optical signal reflected from a surface of the resin composition.

The detector may include a displacement sensor or a line diode array.

The scanner may be a time-of-flight (TOF) scanner.

The frame may include a bottom surface on which the resin composition is applied.

The analyzer may be configured to determine the area of the resin composition based on the height of the 3D profile relative to the bottom surface.

The analyzer may be configured to determine volume of the resin composition based on the 3D profile.

The analyzer may be configured to determine the mass of the resin composition based on the volume.

Example embodiments provide a system including a resin composition coater configured to apply a resin composition on a frame, and an inspection device configured to inspect the resin composition.

The inspection device may be configured to determine a 3D profile of the frame and the resin composition on the frame and determine an area and mass of the resin composition based on the 3D profile.

Example embodiments provide a method of manufacturing a battery module, the method including providing a resin composition on a frame, inspecting the resin composition, and determining a mass and area of the resin composition based on a result of inspecting the resin composition.

The inspecting of the resin composition may include determining a 3D profile constituted by the frame and the resin composition.

The mass and area of the resin composition may be determined based on the 3D profile.

The mass of the resin composition may be determined based on volume of the resin composition.

The volume of the resin composition is determined based on the 3D profile.

### [Advantageous Effects]

An inspection device according to example embodiments of the present invention is capable of measuring both the area and mass of a resin composition. Accordingly, a tact time for manufacturing a battery module can be reduced.

Effects achievable from example embodiments of the present invention are not limited to the above-described effects, and other effects that are not described herein will be clearly derived and understood by those of ordinary skilled in the art to which the example embodiments of the present invention pertain from the following description. The scope of the invention is defined by the claims.

### [Brief Description of the Drawings]

FIG. 1 is a block diagram for describing a system according to example embodiments.
FIGS. 2A and 2B are diagrams for describing a resin composition coater according to example embodiments.
FIGS. 3A to 3C are diagrams for describing an inspection device according to example embodiments
FIGS. 4A and 4B are diagrams for describing a resin composition coater according to other example embodiments.
FIG. 5 is a flowchart of a method of manufacturing a battery module according to example embodiments.
FIG. 6A is a perspective view of a battery module.
FIG. 6B is an exploded perspective view of the battery module of FIG. 6A.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

Therefore, embodiments set forth herein and configurations illustrated in the drawings are only embodiments of the present invention and do not reflect all the technical ideas of the present invention. The scope of the invention is defined by the claims.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

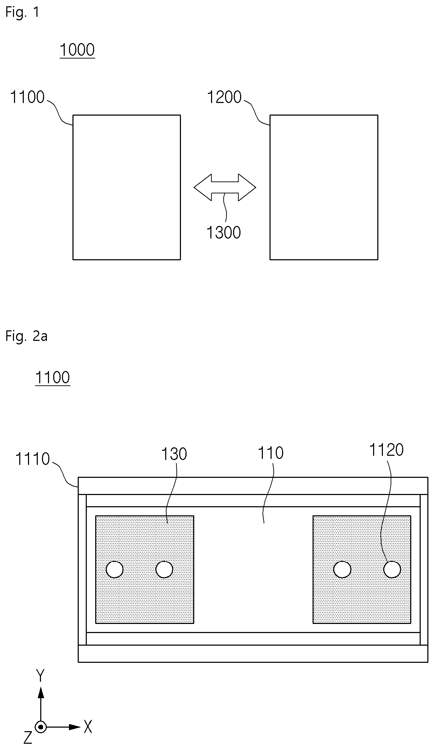

FIG. 1 is a block diagram for describing a system 1000 according to example embodiments.

Referring to FIG. 1, the system 1000 may include a resin composition coater 1100 and an inspection device 1200.

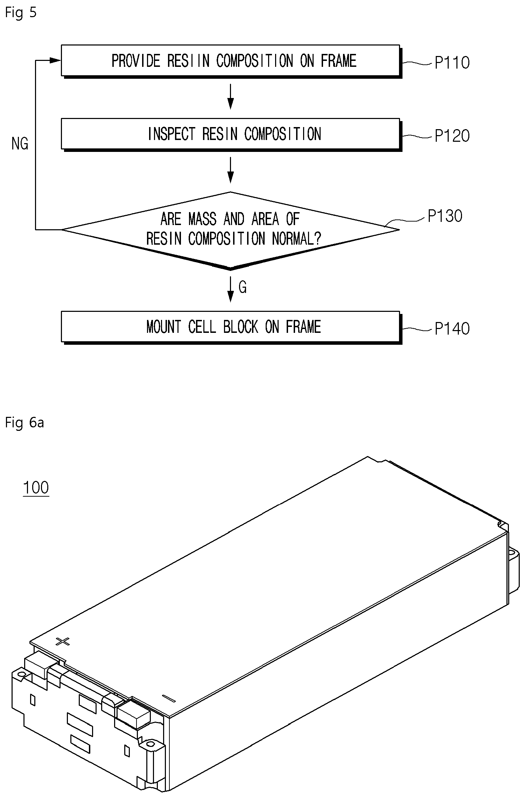

The system 1000 may perform at least some of processes of manufacturing a secondary battery. The system 1000 may perform at least a part of a manufacturing process of the battery module 100 (see FIG. 6A). The system 1000 may be configured to apply a resin composition 130 (see FIG. 2A) on a frame 110 (see FIG. 2A) and inspect the resin composition 130.

The system 1000 may further include a transfer system 1300 to transfer a workpiece processed by the resin composition coater 1100 to the inspection device 1200. The transfer system 1300 may transfer the workpiece on which a dispensing process is completed to the inspection device 1200 in synchronization with an operation of the resin composition coater 1100. The transfer system 1300 may be controlled by a supervisory control system and transfer the workpiece to the inspection device 1200 without an operator's intervention. Accordingly, a tact time for manufacturing a secondary battery may decrease and productivity may increase. The transfer system 1300 may return the workpiece back to the resin composition coater 1100 when an additional process (e.g., additional application of the resin composition 130 (see FIG. 2A)) is required as a result of the inspection by the inspection device 1200.

The system 1000 may further include a buffer to temporarily store the workpiece between the resin composition coater 1100 and the inspection device 1200.

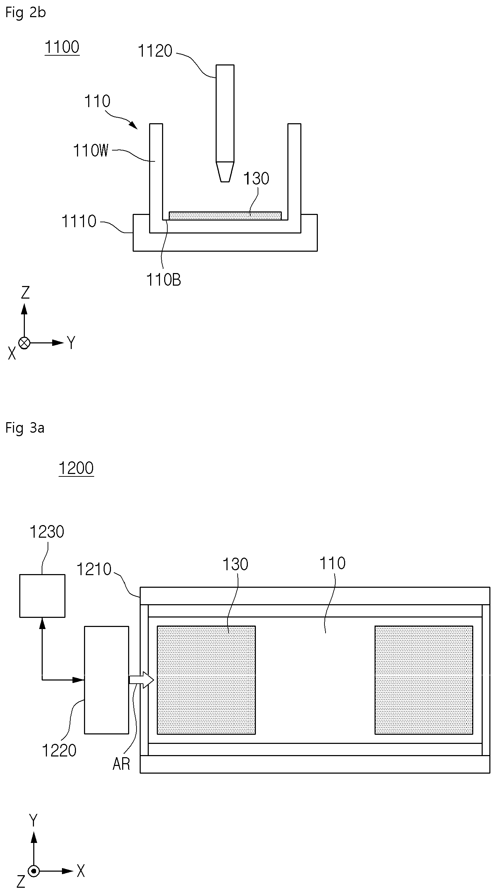

FIGS. 2A and 2B are diagrams for describing a resin composition coater 1100 according to example embodiments. More specifically, FIG. 2A is a plan view of the resin composition coater 1100, and FIG. 2B is a front view of the resin composition coater 1100.

Referring to FIGS. 2A and 2B, the resin composition coater 1100 may include a jig 1110 and dispensers 1120. The jig 1100 may be configured to support the frame 110. The jig 1100 may fix the frame 110 during the application of the resin composition 130. Accordingly, a set portion of the frame 110 may be exactly coated with the resin composition 130, thus increasing the reliability of the dispensing process.

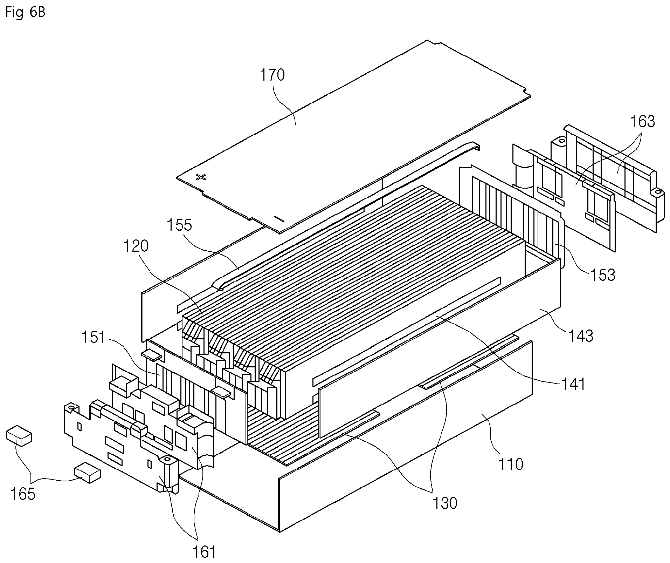

The dispensers 1120 may be configured to discharge the resin composition 130. The resin composition 130 may fix a cell block 120 (see FIG. 6B) to the frame 110 as described below. Accordingly, the resin composition 130 may be accurately applied on a position on the frame 110 at which the cell block 120 (see FIG. 6B) is to be mounted.

The frame 110 may support elements of the battery module 100 (see FIG. 6B). The battery module 100 (see FIG. 6B) may be provided by sequentially assembling the elements thereof on the frame 11. The frame 110 may include, for example, a metal material such as aluminum.

The frame 110 may include a bottom surface 110B and side walls 110W. Thus, the frame 110 may have a U shape when viewed from the front. Two directions substantially parallel to the bottom surface 110B of the frame 110 will be defined as an X-axis direction and a Y-axis direction, and a direction substantially perpendicular to the bottom surface 110B of the frame 110 will be defined as a Z-axis direction. The X-axis direction, the Y-axis direction, and the Z-axis direction may be substantially perpendicular to one another.

The side walls 110W may be positioned at both ends of the bottom surface 110B. The side walls 110W may extend in the X-axis direction and be substantially perpendicular to the Y-axis direction. The side walls 110W may have a certain height from the bottom surface 110B in the Z-axis direction. As a non-limiting example, a length of the frame 110 in the X-axis direction may be longer than that of the frame 110 in the Y-axis direction. Hereinafter, the X-axis direction may be referred to as a longitudinal direction of the frame 110, and the Y-axis direction may be referred to as a width direction of the frame 110.

According to example embodiments, the resin composition 130 may be a two-component resin composition. According to example embodiments, the resin composition 130 may include a major component (Part A), a curing agent (Part B), a dispersant, and an inorganic filler. The resin composition 130 may further include a viscosity adjusting agent such as a thixotropic agent, a diluent, a surface treatment agent or a coupling agent.

The resin composition 130 may be a room-temperature curable composition. That is, a curing reaction of the resin composition 130 may start and proceed at room temperature.

As a non-limiting example, the major component of the resin composition 130 may be a silicone resin, a polyol resin, an epoxy resin, or an acrylic resin. In the resin composition 130, the curing agent of the resin composition 130 may be selected according to the major component of the resin composition 130. For example, the curing agent may be a siloxane compound when the major component of the resin composition 130 is a silicone resin, may be an isocyanate compound when the major component of the resin composition 130 is a polyol resin, may be an amine compound when the major component of the resin composition 130 is an epoxy resin, and may be an isocyanate compound when the major component of the resin composition 130 is an acrylic resin.

The inorganic filler of the resin composition 130 may have relatively high thermal conductivity. According to example embodiments, the thermal conductivity of the inorganic filler of the resin composition 130 may be about 1 W/mK or more. According to example embodiments, the thermal conductivity of the inorganic filler of the resin composition 130 may be about 5 W/mK or more. According to example embodiments, the thermal conductivity of the inorganic filler of the resin composition 130 may be about 10 W/mK or more. According to example embodiments, the thermal conductivity of the inorganic filler of the resin composition 130 may be about 15 W/mK or more.

According to example embodiments, the inorganic filler of the resin composition 130 may include ceramic. For example, the inorganic filler of the resin composition 130 may include one of aluminum oxide (Al₂O₃), aluminum nitride (AlN), boron nitride (BN), silicon nitride (Si₃N₄), silicon carbide (SiC), beryllium oxide (BeO), zinc oxide (ZnO), aluminum hydroxide (Al(OH)₃), and boehmite. The resin composition 130 may include a carbon filler. The resin composition 130 may include, for example, one of fumed silica, clay, and calcium carbonate.

The dispersant of the resin composition 130 may improve dispersibility of the inorganic filler of the resin composition 130. Accordingly, the inorganic fillers of the resin composition 130 may be uniformly distributed.

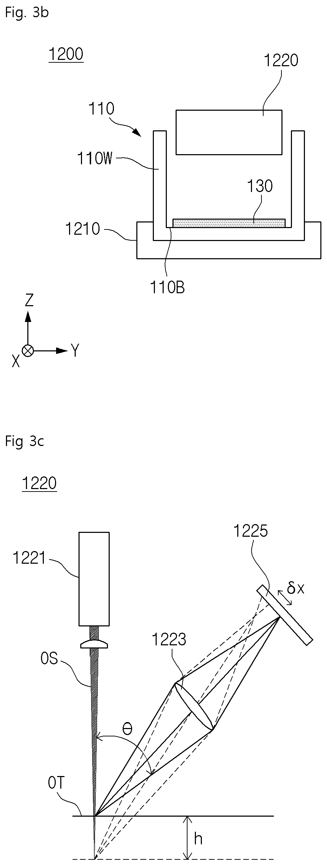

FIGS. 3A and 3B are diagrams for describing an inspection device 1200 according to example embodiments. More specifically, FIG. 3A is a plan view of the inspection device 1200, and FIG. 3B is a front view of the inspection device 1200.

Referring to FIGS. 3A and 3B, the inspection device 1200 may include a jig 1210, a scanner 1220, and an analyzer 1230. The jig 1210 may be configured to support the frame 110. The jig 1210 may fix the frame 110 during the inspection of the resin composition 130. Accordingly, the frame 110 may be prevented from being moved during the inspection of the resin composition 130, and the reliability of the inspection may be improved.

The scanner 1220 may be, for example, a line scanner. The scanner 1220 may be configured to inspect the resin composition 130 while moving in the X-axis direction. The scanner 1220 may be configured to sense a three-dimensional (3D) structure of a resin composition. The scanner 1220 may be configured to sense a 3D profile constituted by the frame 110 and the resin composition 130. The 3D profile of the frame 110 and the resin composition 130 may be a set of physically outermost points on a structure composed of the frame 110 and the resin composition 130 on the frame 110. According to example embodiments, the 3D profile may be sensed with respect to the bottom surface 110B of the frame 110.

The analyzer 1230 may be configured to determine an area, volume, and mass of the resin composition 130 based on a result of inspecting the scanner 1220. The analyzer 1230 may be configured to determine the area, volume, and mass of the resin composition 130 based on the 3D profile of the frame 110 and the resin composition 130 sensed by the scanner 1220.

The analyzer 1230 may be configured to determine a position at which the resin composition 130 is applied and an area to which the resin composition 130 is applied based on the 3D profile of the frame 110 and the resin composition 130. The analyzer 1230 may be configured to determine the volume of the resin composition 130 based on the 3D profile constituting the frame 110 and the resin composition 130. The volume of the resin composition 130 may be calculated through integrating on height of the resin composition 130 at a position, which is determined by the analyzer 1230, at which the resin composition 130 has been applied. For example, volume V of the resin composition 130 may be determined by the following equation: [Equation] $V = \int hdxdy ,$ wherein h denotes the height of the resin composition 130, dx denotes a differential of x, and dy denotes a differential of y.

The analyzer 1230 may be configured to determine mass of the resin composition 130 based on the volume of the resin composition 130. The mass of the resin composition 130 may be calculated by performing an operation (e.g., multiplication) on known density of the resin composition 130 and the volume of the resin composition 130 determined by the analyzer 1230.

The analyzer 1230 may be a computing device such as a workstation computer, a desktop computer, a laptop computer, or a tablet computer. The analyzer 1230 may be configured as a separate hardware component or may be separate software included in each hardware component. The analyzer 1230 may be a simple controller, a microprocessor, a complex processor such as a CPU or a GPU, a processor configured by software, dedicated hardware, or firmware. The analyzer 1230 may be implemented, for example, by a general-purpose computer or application-specific hardware such as a digital signal process (DSP), a field-programmable gate array (FPGA) or an application-specific integrated circuit (ASIC).

According to some embodiments, an operation of the analyzer 1230 may be implemented by instructions stored in a machine-readable medium that is readable and executable by one or more processors. Here, the machine-readable medium may include a mechanism for storing and/or transmitting information in a form readable by a machine (e.g., a computing device). For example, machine-readable media may include a read-only memory (ROM), a random access memory (RAM), magnetic disk storage media, optical storage media, flash memory devices, electrical, optical, acoustic, or other types of radio signals (e.g., carrier waves, infrared signals, digital signals, etc.), and other signals.

Firmware, software, routines, and instructions may also be configured to perform the above-described operation of the analyzer 1230 or processes to be described below. However, the above description is provided only for convenience of description, and it should be understood that the above-described operation of the analyzer 1230 may be performed by a computing device, a processor, a controller, or other devices for executing firmware, software, routines, instructions, etc.

FIG. 3C is a diagram for describing an inspection device 1220 according to example embodiments.

The inspection device 1220 may include a laser source 1221, an imaging lens 1223, and a detector 1225. The laser source 1221 may be configured to generate and emit an optical signal OS for sensing a 3D profile. The optical signal OS emitted from the laser source 1221 may be reflected from a surface of an inspection object OT to be inspected, be concentrated on the imaging lens 1223, and arrive at the detector 1225. The detector 1225 may include a displacement sensor or a line diode array.

The inspection device 1220 may determine height h of the inspection object OT from a reference plane of the surface based on a position on the detector 1225 at which the optical signal OS reflected from the surface of the inspection object OT is focused. As a non-limiting example, a reference point of the height h may be a bottom surface 110B (see FIG. 3B) of the frame 110 (see FIG. 3B).

The height h from the surface of the inspection object OT may be calculated based on a displacement δx between the position on the detector 1225 at which the optical signal OS reflected from the surface of the inspection object OT is focused and a reference position on the detector 1225 and an angle θ between the laser source 1221 and the detector 1225. Here, the angle θ may be defined as an angle between an optical axis of the laser source 1221 and an optical axis of the detector 1225 in the a free-space optics of the inspection device 1220.

Although an example in which the inspection device 1220 is of a displacement sensor type has been described above, it should be understood that the technical idea of the present invention is not limited thereto in any sense. The inspection device 1220 may be a time-of-flight (TOF) scanner. Here, the TOF scanner may measure a distance from the TOF scanner to an object to be inspected by emitting a signal to the object and measuring a time required to sense the signal reflected from the object. A signal of the TOF scanner may be an optical signal, a radio wave signal, or a terahertz wave signal.

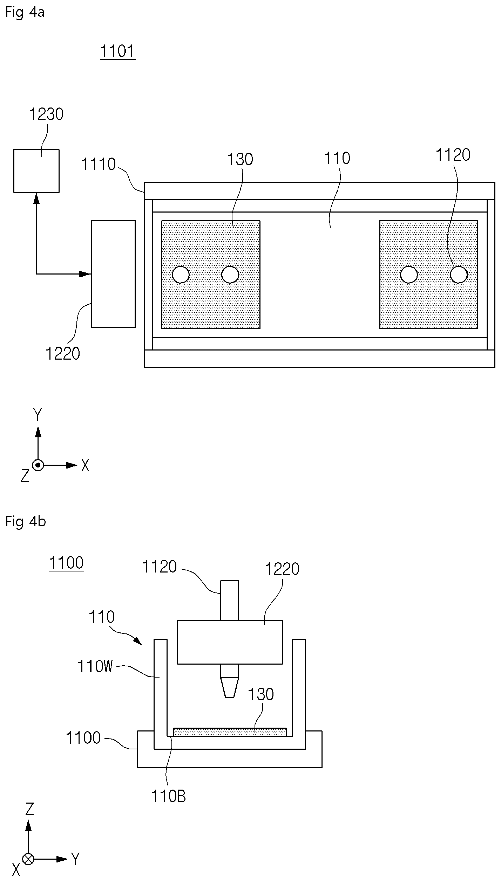

FIGS. 4A and 4B are diagrams for describing a resin composition coater 1101 according to other example embodiments. More specifically, FIG. 4A is a plan view of the resin composition coater 1101, and FIG. 4B is a front view of the resin composition coater 1101.

Referring to FIGS. 4A and 4B, the resin composition coater 1101 may include a scanner 1220 and an analyzer 1230, as well as a jig 1110 and dispensers 1120.

The jig 1110 and the dispensers 1120 may be substantially the same as those described above with reference to FIGS. 2A and 2B. The scanner 1220 and the analyzer 1230 may be substantially the same as those described above with reference to FIGS. 3A and 3B.

According to embodiments, because the resin composition coater 1101 includes the scanner 1220 and the analyzer 1230, a resin composition 130 may be immediately inspected without having to be transferred after dispensing of the resin composition 130. Accordingly, a tact time for manufacturing a battery module can be reduced.

The resin composition coater 1101 may include a driving device for moving the dispensers 1120. The driving device may provide a space for performing scanning by the scanner 1220 by moving the dispensers 1120 after dispensing process.

FIG. 5 is a flowchart of a method of manufacturing a battery module according to example embodiments.

FIG. 6A is a perspective view of a battery module 100.

FIG. 6B is an exploded perspective view of the battery module 100 of FIG. 6A.

Referring to FIGS. 5 to 6B, in P110, a resin composition 130 may be provided on a frame 110. The resin composition 130 may be provided by the resin composition coater 1100 of FIGS. 2A and 2B.

The battery module 100 is an assembly of battery cells each including a cell block 120 and a frame 110 on which the cell block 120 is mounted. The battery module 100 may further include the resin composition 130, an adhesive 141, compression pads 143, a front bus/flexible printed circuit board (FPCB) (hereinafter referred to as B/F) assembly 151, a rear B/F assembly 153, a flat flexible cable (FFC) assembly 155, a front end plate assembly 161, a rear end plate assembly 163, a terminal cover 165, and an upper plate 170.

The cell block 120 may include a plurality of battery cells. Generally, the cell block 120 includes eight to twelve battery cells, and an extended module including twenty four or more battery cells has recently been proposed.

A battery cell is a basic unit of a lithium ion battery, i.e., a secondary battery. The battery cell includes an electrode assembly, an electrolyte, and a case. Battery cells are classified into a lithium ion battery, a lithium ion polymer battery, a lithium polymer battery, etc. according to a configuration of an electrode assembly and an electrolyte. A market share of lithium ion polymer batteries in the field of secondary battery is increasing due to a low possibility of leakage of an electrolyte and easiness in manufacturing.

Battery cells are classified into cylindrical batteries in which an electrode assembly is built in a cylindrical metal can, prismatic batteries in which an electrode assembly is built in a prismatic metal can, and pouch-type batteries in which an electrode assembly is built in a pouch case of aluminum laminate sheet, according to a shape of a battery case.

An electrode assembly included in a battery case includes a positive electrode, a negative electrode, and a separator interposed between the positive electrode and the negative electrode. The electrode assembly may be classified as a jelly-roll type electrode assembly or a stack type electrode assembly according to a form of assembly. The jelly roll type electrode assembly is manufactured by winding a positive electrode, a negative electrode, and a separator interposed therebetween. The stack type electrode assembly includes a plurality of positive electrodes, a plurality of negative electrodes, and a plurality of separators interposed therebetween that are stacked sequentially.

The positive electrodes may each include a positive electrode current collector and a positive electrode active material. The negative electrodes may each include a negative electrode current collector and a negative electrode active material.

A thickness of the positive electrode current collector may range from about 3 µm to about 500 µm. The positive electrode current collector may not cause a chemical change in a finally manufactured secondary battery and may have high conductivity. The positive electrode current collector may include, for example, stainless steel, nickel, titanium, baked carbon, and aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of film, sheet, foil, net, porosity, foam, nonwoven fabric or the like.

A thickness of the negative electrode current collector may be in a range of about 3 µm to about 500 µm. The negative electrode current collector may not cause a chemical change in a finally manufactured secondary battery and may have high conductivity. The negative electrode current collector may include stainless steel, aluminum, nickel, titanium, baked carbon, and aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. A surface of the negative electrode current collector may include a fine uneven structure to increase the adhesion of the active material.

The positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎A, e.g., Li_{1+z}Ni_{1/3}Co_{1/3}Mn_{1/3}O₂ or Li_{1+zN}i_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

For example, the negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, and tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

Next, in P120, the resin composition 130 may be inspected. The resin composition 130 may be inspected by the inspection device 1200 of FIGS. 3A and 3B. A 3D profile constituted by the frame 110 and the resin composition 130 may be determined by inspecting the resin composition 130.

Next, in P130, a mass and area of the resin composition 130 may be determined, and it can be determined whether the mass and area of the resin composition are within the normal range. Because the determination of the mass and area of the resin composition 130 is substantially the same as that described above with reference to FIGS. 3A to 3C, a redundant description thereof is omitted here. When the mass and area of the resin composition 130 determined in P130 are not in a normal range (NG), the method may return to operation P110 to provide the resin composition 130 again.

In P140, when the mass and area of the resin composition 130 determined in P130 are in the normal range (G), the cell block 120 may be coupled to the frame 110. Before coupling the cell block 120 to the frame 110, the compression pads 143, the front B/F assembly 151, the rear B/F assembly 153, and the FFC assembly 155 may be coupled to the cell block 120.

The cell block 120 may be adhered to the frame 110 by the resin composition 130. The cell block 120 may be mounted on the frame 110 to overlap the resin composition 130. The frame 110 may cover a bottom surface and both side surfaces of the cell block 120. The bottom surface of the cell block 120 may face the resin composition 130 and a bottom surface 110B of the frame 110. The resin composition 130 may be interposed between the frame 110 and the cell block 120.

The compression pads 143 may be fixed to the cell block 120 by the adhesive 141. The adhesive 141 may be a spray type adhesive. Each of the compression pads 143 may be disposed on one of both side surfaces of the cell block 120. Each of the compression pads 143 may cover one of the side surfaces of the cell block 120.

The front B/F assembly 151 and the rear B/F assembly 153 may provide an electrical path to transmit a control signal and a sensing signal to the plurality of battery cells of the cell block 120 and to charge and discharge power. The front B/F assembly 151 may be coupled to a front surface of the cell block 120, and the rear B/F assembly 153 may be coupled to a rear surface of the cell block 120.

The front B/F assembly 151 and the rear B/F assembly 153 may be connected to each other by the FFC assembly 155. The FFC assembly 155 may be disposed on a top surface of the cell block 120.

The resin composition 130 may fix the frame 110 and the cell block 120. Accordingly, the mechanical reliability of the battery module 100 may be improved. The resin composition 130, when cured, may be a thermal interface material (TIM) and may mediate heat between the frame 110 and the cell block 120. Accordingly, heat generated by the cell block 120 may be effectively discharged, and the reliability of the operation of the battery module 100 may be improved.

The present invention has been described above in more detail with reference to the drawings, the embodiments, etc. However, the configurations illustrated in the drawings or embodiments described in the present specification are only embodiments of the present invention and do not reflect all the technical ideas of the present invention. The scope of the invention is defined by the claims.

## Claims

1. A system (1000) for manufacturing at least a part of a battery module (100) comprising:
a resin composition coater (1100) configured to apply a resin composition (130) on a frame (110) of a battery module (100); and
an inspection device (1220) configured to inspect the resin composition (130),
wherein the inspection device comprises a scanner (1220) configured to scan the resin composition (130) on the frame (110) to determine a three-dimensional (3D) profile of the frame (110) and the resin composition (130) on the frame (110) and an analyzer (1230) to determine an area and mass of the resin composition (130) based on the 3D profile.

2. The system (1000) according to claim 1, wherein the scanner (1220) includes:
a laser source (1221) configured to generate an optical signal; and
a detector (1225) configured to detect the optical signal reflected from a surface of the resin composition (130),
wherein the detector (1225) includes a displacement sensor or a line diode array.

3. The system (1000) according to any one of claim 1, wherein the scanner (1220) is a time-of-flight, TOF, scanner.

4. The system (1000) according to any one of claims 1 to 3, wherein the frame (110) includes a bottom surface (110B) on which the resin composition (130) is applied, and
the analyzer is configured to determine the area of the resin composition (130) based on a height of the 3D profile relative to the bottom surface (110B).

5. The system (1000) according to any one of claims 1 to 4, wherein the analyzer (1230) is configured to determine volume of the resin composition (130) based on the 3D profile.

6. The system (1000) according to any one of claims 1 to 4, wherein the analyzer is configured to determine the mass of the resin composition (130) based on the volume.

7. A method of manufacturing a battery module (100), wherein the system (1000) according to any one of claim 1 to 6 performs the following steps:
providing (P110) a resin composition (130) on a frame (110);
inspecting (P120) the resin composition (130); and
determining (P130) a mass and area of the resin composition (130) based on a result of inspecting the resin composition (130).

8. The method of claim 7, wherein the inspecting of the resin composition (130) includes determining a three-dimensional, 3D, profile constituted by the frame (110) and the resin composition (130).

9. The method of claim 8, wherein the mass and area of the resin composition (130) are determined based on the 3D profile.

10. The method of claim 8, wherein the mass of the resin composition (130) is determined based on volume of the resin composition (130).

11. The method of claim 10, wherein the volume of the resin composition (130) is determined based on the 3D profile.

## Patentansprüche

1. System (1000) zur Herstellung mindestens eines Teils eines Batteriemoduls (100), umfassend:
einen Harzzusammensetzungs-Beschichter (1100), der konfiguriert ist, um eine Harzzusammensetzung (130) auf einen Rahmen (110) eines Batteriemoduls (100) aufzubringen; und
eine Inspektionsvorrichtung (1220), die konfiguriert ist, um die Harzzusammensetzung (130) zu inspizieren,
wobei die Inspektionsvorrichtung einen Scanner (1220) umfasst, der konfiguriert ist, um die Harzzusammensetzung (130) auf dem Rahmen (110) zu scannen, um ein dreidimensionales (3D)-Profil des Rahmens (110) und der Harzzusammensetzung (130) auf dem Rahmen (110) zu bestimmen, und einen Analysator (1230), um eine Fläche und Masse der Harzzusammensetzung (130) basierend auf dem 3D-Profil zu bestimmen.

2. System (1000) nach Anspruch 1, wobei der Scanner (1220) beinhaltet:
eine Laserquelle (1221), die konfiguriert ist, um ein optisches Signal zu erzeugen; und
einen Detektor (1225), der konfiguriert ist, um das von einer Oberfläche der Harzzusammensetzung (130) reflektierte optische Signal zu detektieren,
wobei der Detektor (1225) einen Wegsensor oder ein Zeilendioden-Array beinhaltet.

3. System (1000) nach einem von Anspruch 1, wobei der Scanner (1220) ein Time-of-Flight-, TOF-Scanner ist.

4. System (1000) nach einem der Ansprüche 1 bis 3, wobei der Rahmen (110) eine Bodenoberfläche (110B) beinhaltet, auf der die Harzzusammensetzung (130) aufgebracht wird, und
der Analysator konfiguriert ist, um die Fläche der Harzzusammensetzung (130) basierend auf einer Höhe des 3D-Profils in Bezug zur Bodenoberfläche (110B) zu bestimmen.

5. System (1000) nach einem der Ansprüche 1 bis 4, wobei der Analysator (1230) konfiguriert ist, um das Volumen der Harzzusammensetzung (130) basierend auf dem 3D-Profil zu bestimmen.

6. System (1000) nach einem der Ansprüche 1 bis 4, wobei der Analysator konfiguriert ist, um die Masse der Harzzusammensetzung (130) basierend auf dem Volumen zu bestimmen.

7. Verfahren zur Herstellung eines Batteriemoduls (100), wobei das System (1000) nach einem der Ansprüche 1 bis 6 die folgenden Schritte durchführt:
Bereitstellen (P110) einer Harzzusammensetzung (130) auf einem Rahmen (110);
Inspizieren (P120) der Harzzusammensetzung (130); und
Bestimmen (P130) einer Masse und Fläche der Harzzusammensetzung (130) basierend auf einem Inspektionsergebnis der Harzzusammensetzung (130).

8. Verfahren nach Anspruch 7, wobei das Inspizieren der Harzzusammensetzung (130) Bestimmen eines dreidimensionalen (3D)-Profils umfasst, das durch den Rahmen (110) und die Harzzusammensetzung (130) gebildet wird.

9. Verfahren nach Anspruch 8, wobei die Masse und Fläche der Harzzusammensetzung (130) basierend auf dem 3D-Profil bestimmt werden.

10. Verfahren nach Anspruch 8, wobei die Masse der Harzzusammensetzung (130) basierend auf dem Volumen der Harzzusammensetzung (130) bestimmt wird.

11. Verfahren nach Anspruch 10, wobei das Volumen der Harzzusammensetzung (130) basierend auf dem 3D-Profil bestimmt wird.

## Revendications

1. Système (1000) pour la fabrication d'au moins une partie d'un module de batterie (100) comprenant :
un dispositif de revêtement de composition de résine (1100) configuré pour appliquer une composition de résine (130) sur un cadre (110) d'un module de batterie (100) ; et
un dispositif d'inspection (1220) configuré pour inspecter la composition de résine (130),
dans lequel le dispositif d'inspection comprend un scanner (1220) configuré pour balayer la composition de résine (130) sur le cadre (110) afin de déterminer un profil tridimensionnel (3D) du cadre (110) et de la composition de résine (130) sur le cadre (110) et un analyseur (1230) pour déterminer une surface et une masse de la composition de résine (130) sur la base du profil 3D.

2. Le système (1000) selon la revendication 1, dans lequel le scanner (1220) inclut :
une source laser (1221) configurée pour générer un signal optique ; et
un détecteur (1225) configuré pour détecter le signal optique réfléchi par une surface de la composition de résine (130),
dans lequel le détecteur (1225) inclut un capteur de déplacement ou un réseau de diodes en ligne.

3. Le système (1000) selon l'une quelconque de la revendication 1, dans lequel le scanner (1220) est un scanner à temps de vol (TOF).

4. Le système (1000) selon l'une quelconque des revendications 1 à 3, dans lequel le cadre (110) inclut une surface inférieure (110B) sur laquelle la composition de résine (130) est appliquée, et
l'analyseur est configuré pour déterminer la surface de la composition de résine (130) sur la base d'une hauteur du profil 3D par rapport à la surface inférieure (110B).

5. Le système (1000) selon l'une quelconque des revendications 1 à 4, dans lequel l'analyseur (1230) est configuré pour déterminer le volume de la composition de résine (130) sur la base du profil 3D.

6. Le système (1000) selon l'une quelconque des revendications 1 à 4, dans lequel l'analyseur est configuré pour déterminer la masse de la composition de résine (130) sur la base du volume.

7. Procédé de fabrication d'un module de batterie (100), dans lequel le système (1000) selon l'une quelconque des revendications 1 à 6 réalise les étapes suivantes :
la fourniture (P110) d'une composition de résine (130) sur un cadre (110) ;
l'inspection (P120) de la composition de résine (130) ; et
la détermination (P130) d'une masse et d'une surface de la composition de résine (130) sur la base d'un résultat de l'inspection de la composition de résine (130).

8. Le procédé de la revendication 7, dans lequel l'inspection de la composition de résine (130) inclut la détermination d'un profil tridimensionnel (3D) constitué par le cadre (110) et la composition de résine (130).

9. Le procédé de la revendication 8, dans lequel la masse et la surface de la composition de résine (130) sont déterminées sur la base du profil 3D.

10. Le procédé de la revendication 8, dans lequel la masse de la composition de résine (130) est déterminée sur la base du volume de la composition de résine (130).

11. Le procédé de la revendication 10, dans lequel le volume de la composition de résine (130) est déterminé sur la base du profil 3D.
